# EUROPEAN PATENT APPLICATION

(11) **EP 4 527 882 A1**
(43) Date of publication of application: **26.03.2025**
(21) Application number: 23912639.4
(22) Date of filing: 04.12.2023
(51) Int. Cl.: C08K 5/00, C08K 5/3492, C08K 5/06, C08L 71/12

(54) **CURING AGENT COMPOSITION AND CURABLE COMPOSITION CONTAINING SAME**

(30) Priority: 28.12.2022 KR 20220187947
(71) Applicant: Kolon Industries, Inc., Seoul 07793 (KR)
(72) Inventor: SEO, Da Young, Seoul 07793 (KR); CHUNG, Kun Ho, Seoul 07793 (KR); NAM, Sae Rom, Seoul 07793 (KR)
(74) Representative: Ter Meer Steinmeister & Partner
(86) International application number: PCT/KR2023/019788
(87) International publication number: WO 2024/143964

(57) **Abstract**

A curing agent composition includes: a first compound represented by Formula 1 wherein n=1; and a second compound represented by Formula 1 wherein n=2, wherein the curing agent composition shows high decomposition temperature and excellent solubility, such that uneven curing attributable to partial decomposition of a curing agent when crosslinking under vacuum at a high temperature may be prevented.

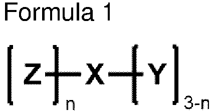

## Description

### Technical Field

Provided are a curing agent composition and a curable composition including the curing agent.

### Background Art

In the fifth generation communication system ^{┌} 5G _{┘} , the development of which is currently accelerating, it is expected that new large-capacity and high-speed communications will progress in data communications of various devices including smartphones. The need for materials with low dielectric loss tangent is increasing, at least a dielectric loss tangent of 0.005 or less at 1 GHz is required, and there is a need for a material capable of achieving these heat resistance and dielectric properties (dielectric loss tangent).

In particular, triallyl isocyanurate (TAIC) is typically used as a curing agent in 5G copper-clad laminations (CCLs) to realize excellent low-dielectric properties. TAIC, as the double bond at its end is crosslinked with a polymer by an initiator, cures the polymer to thereby provide CCLs for 5G with low dielectric properties.

However, due to a low decomposition temperature (Td) of TAIC, if crosslinked under vacuum high-temperature conditions, TAIC partially evaporates, giving rise to locally uneven curing, that may lead to deterioration in heat resistance and durability. In this context, to prevent the occurrence of uneven curing, there is an increasing need for a curing agent with a high decomposition temperature (Td).

### PRIOR ART DOCUMENTS

### PATENT DOCUMENTS

Korean Application Publication No. 10-2022-0128657

### Disclosure

### Technical Problem

One aspect of the present disclosure provides a crosslinking agent having a high decomposition temperature and a curable composition including the crosslinking agent.

### Technical Solution

One aspect of the present disclosure relates to a curing agent composition including a first compound represented by Formula 1 wherein n=1; and a second compound represented by Formula 1 wherein n=2. 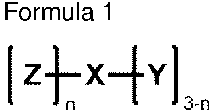 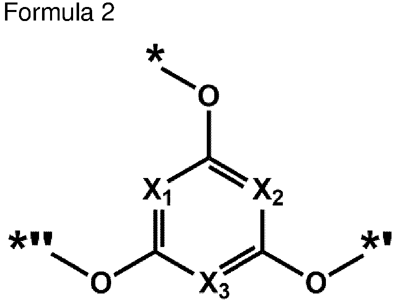 In Formulas 1 and 2,
X may be represented by Formula 2,
X₁ may be N or CR₁,
X₂ may be N or CR₂,
X₃ may be N or CR₃,
*, *', and *" may each independently be a binding site with Y or Z in Formula 1,
Y may be a C₂-C₁₅ alkenyl group,
Z may be a C₈-C₂₁ alkenyl phenyl group,
R₁ to R₃ may each independently be hydrogen, a C₁-C₁₅ alkyl group, a C₂-C₁₅ alkenyl group, or a C₈-C₂₁ alkenyl phenyl group, and
n may be an integer of 0 to 3.

Another aspect of the present disclosure relates to a curable composition including the curing agent composition.

### Advantageous Effects

The curing agent composition according to the present disclosure, due to having a high decomposition temperature, may prevent uneven curing due to partial decomposition of the curing agent composition, even when crosslinked at a high temperature under vacuum.

In addition, the curing agent composition according to the present disclosure may have excellent solubility even with an increased decomposition temperature.

### Description of Drawings

FIG. 1 is a photograph of a liquid curing agent composition prepared according to Preparation Example 1.
FIG. 2 is a photograph for evaluation of a solubility of the composition prepared according to Comparative Preparation Example 1.
FIG. 3 is a graph showing the measurement results of a decomposition temperature of the curing agent composition prepared according to Preparation Example 1 as measured using a thermogravimetric analyzer (TGA).
FIG. 4 is a graph showing the measurement results of a decomposition temperature of TAIC as measured using a thermogravimetric analyzer (TGA).

### Mode for Invention

Hereinbelow, various aspects and various embodiments of the present disclosure will be described in greater detail.

The terms or words used in the present specification and the claims should not be construed as being typical or dictionary meanings, but should be construed as meanings and concepts consistent with the technical concept of the present disclosure on the basis of the principle that an inventor can properly define the concepts of the terms to best describe his or her invention.

The terminology used herein is used for the purpose of describing particular embodiments only and is not intended to limit the present disclosure. As used herein, the singular forms are intended to include the plural forms as well, unless the context clearly indicates otherwise. As used herein, the terms "comprises" and/or "comprising," or "includes" and/or "including" specify the presence of stated features, integers, steps, operations, elements, components, or combinations thereof, but do not preclude the presence or addition of one or more other features, integers, steps, operations, elements, components, or combinations thereof.

In particular, a curing agent composition according to one aspect of the present disclosure may include a first compound represented by Formula 1 wherein n=1; and a second compound represented by Formula 1 wherein n=2. 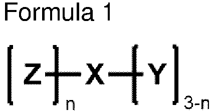 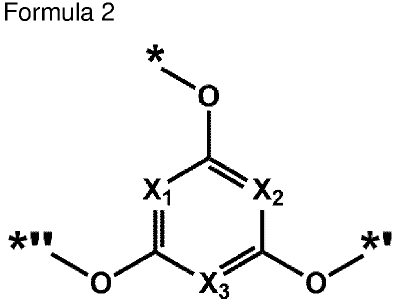 In Formulas 1 and 2,
In Formula 1,
X may be represented by Formula 2,
In Formula 2, X₁ may be N or CR₁, X₂ may be N or CR₂, X₃ may be N or CR₃, and *, *', and *" may each independently be a binding site with Y or Z in Formula 1,
Y may be a C₂-C₁₅ alkenyl group, Z may be a C₈-C₂₁ alkenyl phenyl group,
R₁ to R₃ may each independently be hydrogen, a C₁-C₁₅ alkyl group, a C₂-C₁₅ alkenyl group, or a C₈-C₂₁ alkenyl phenyl group, and n may be an integer of 0 to 3.

According to embodiments, the first compound may be represented by Formula 1-1 below. 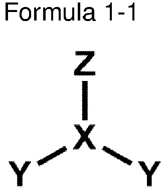 In Formula 1-1, X may be represented by Formula 2, Y may be a C₂-C₁₅ alkenyl group, and Z may be a C₈-C₂₁ alkenyl phenyl group.

For example, the first compound may include Compound 1.

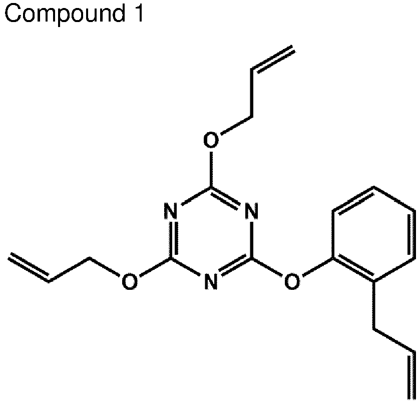

According to embodiments, the second compound may be represented by Formula 1-2.

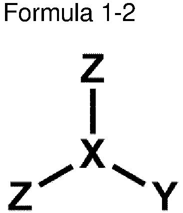

In Formula 1-2, X may be represented by Formula 2, Y may be a C₂-C₁₅ alkenyl group, and Z may be a C₈-C₂₁ alkenyl phenyl group.

For example, the second compound may include Compound 2.

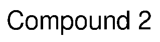

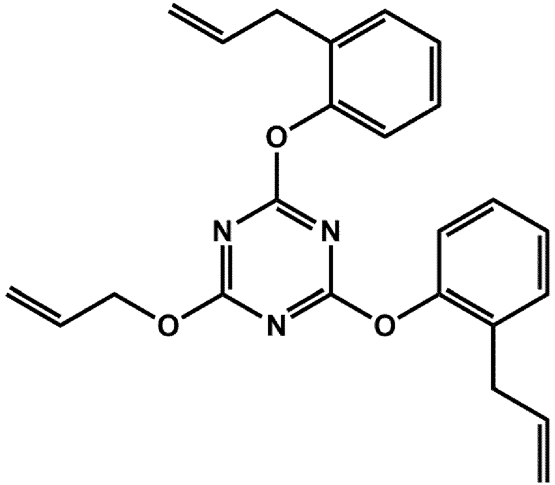

According to embodiments, the ratio of the content of the first compound to the content of the second compound may be about 10:90 to about 90:10.

According to embodiments, the ratio of the content of the first compound to the content of the second compound may be about 40:60 to about 90:10, about 45:55 to about 90:10, about 50:50 to about 90:10, about 40:60 to about 80:20, or about 40:60 to about 70:30.

According to embodiments, the content of the first compound may be greater than or equal to the content of the second compound. If the content of the first compound is greater than the content of the second compound, the curing agent composition may exhibit a high decomposition temperature as well as excellent solubility.

According to embodiments, the curing agent composition may further include a third compound represented by Formula 1 wherein n is 3; or a fourth compound represented by Formula 1 wherein n is 0. For example, the curing agent composition may further include a third compound represented by Formula 1 wherein n is 3. For example, the curing agent composition may further include a fourth compound represented by Formula 1 wherein n is 0. For example, the curing agent composition may further include a third compound represented by Formula 1 above wherein n is 3, and a fourth compound represented by Formula 1 above wherein n is 0.

According to embodiments, the third compound may be represented by Formula 1-3.

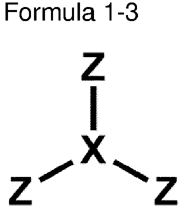

In Formula 1-3, X may be represented by Formula 2, and Z may be a C₈-C₂₁ alkenyl phenyl group.

For example, the third compound may include Compound 3 below.

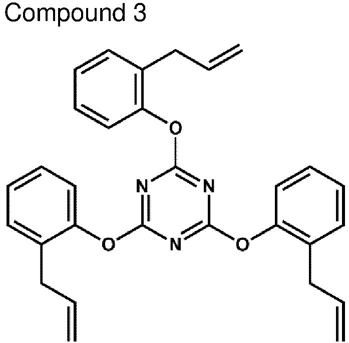

According to embodiments, the fourth compound may be represented by Formula 1-4.

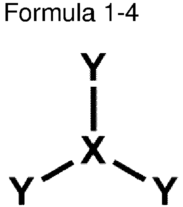

In Formula 1-4, X may be represented by Formula 2 above, and Y may be a C₂-C₁₅ alkenyl group.

For example, the fourth compound may include Compound 4.

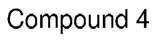

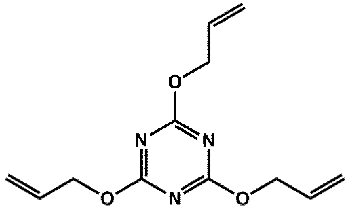

According to embodiments, the sum of the weight of the third compound and the weight of the fourth compound may be 25 wt% or less with respect to a total weight of the curing agent composition.

According to embodiments, the sum of the weight of the third compound and the weight of the fourth compound may be 24 wt% or less, 22 wt% or less, 21 wt% or less, or 20 wt% or less with respect to a total weight of the curing agent composition.

According to embodiments, in Formula 2, X₁, X₂, and X₃ may be the same.

According to embodiments, X₁, X₂, and X₃ may each be N.

According to embodiments, Y in Formula 1 may be represented by Formula 3. 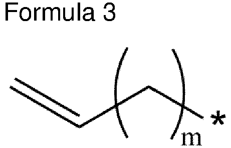 In Formula 3,
m may be an integer of 0 to 5, and
* may be a binding site with Formula 2.

For example, in Formula 3, if m is 0, Y may be a vinyl group.

According to embodiments, in Formula 3, m may be an integer of 1 to 3.

According to embodiments, Y may be an allyl group.

According to embodiments, Z in Formula 1 may be represented by any one of Formulas 4-1 to 4-3. 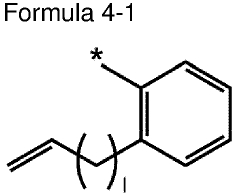 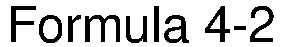 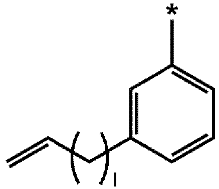 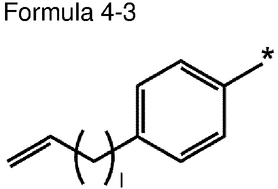 In Formulas 4-1 to 4-3,
I may be an integer of 0 to 5, and
* may be a binding site with Formula 2.

For example, in Formulas 4-1 to 4-3, if I is 0, Z may be a vinyl phenyl group.

According to embodiments, in Formulas 4-1 to 4-3, I may be an integer of 1 to 3.

According to embodiments, Z in Formula 1 above may be represented by Formula 4-1 below.

According to embodiments, Z in Formula 1 above may be represented by Formula 4-1 below, and n may be 1.

According to embodiments, a decomposition temperature (Td) of the curing agent composition may be 150 °C or higher. For example, the decomposition temperature (Td) may refer to a temperature at which the mass of a sample is decreased by 5 % as measured by a thermogravimetric analyzer (TGA). For example, the decomposition temperature (Td) of the curing agent composition may be 160 °C or more, 170 °C or more, 180 °C or more, or 190 °C or more. For example, if the decomposition temperature of the curing agent composition satisfies the aforementioned ranges, the curing agent composition may not undergo decomposition even when cross-linked in a vacuum and high-temperature condition, such that locally uneven curing may be effectively prevented.

A curable composition according to one aspect of the present disclosure may include: the curing agent composition; a base polymer; and an initiator.

For example, the base polymer may be cross-linked with a neighboring base polymer by binding with a double bond in the curing agent composition.

According to embodiments, the base polymer may include a modified polyphenylene oxide (mPPO). For example, the mPPO may include a polyphenylene oxide modified with acrylate or a polyphenylene oxide modified with methacrylate.

According to embodiments, the modified polyphenylene oxide may be represented by Formula 5 below.

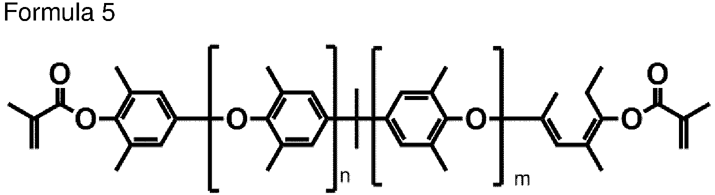

In Formula 5, n and m may each independently be an integer of 1 or more.

The initiator may initiate a crosslinking reaction between a curing agent composition and the base polymer.

According to embodiments, the initiator may include a peroxide-based initiator.

According to embodiments, the peroxide-based initiator may include dicumyl peroxide, diacyl peroxide, 2,4-dichlorobenzoyl peroxide, isobutyryl peroxide, decanoyl peroxide, lauryl peroxide, propionyl peroxide, acetyl peroxide, benzoyl peroxide, p-chlorobenzoyl peroxide, or any combination thereof.

According to embodiments, the initiator may include dicumyl peroxide.

According to embodiments, the ratio of the number of moles of the initiator to the number of moles of the curing agent composition may be about 0.01 to about 0.5. For example, the ratio of the number of moles of the initiator to the number of moles of the curing agent composition may be about 0.05 to about 0.5, about 0.1 to about 0.5, about 0.1 to about 0.4, or about 0.2 to about 0.4.

According to embodiments, the curable composition may further include a solvent.

According to embodiments, the solvent may include toluene, acetone, methyl ethyl ketone, ethyl acetate, or any combination thereof.

According to embodiments, the solvent may include toluene.

According to embodiments, the content of the base polymer included in the curable composition may be about 50 wt% to about 90 wt% with respect to the total weight of solids, the content of the curing agent composition may be about 1 wt% to about 35 wt% with respect to the total weight of solids, and the content of the initiator may be about 1 wt% to about 15 wt% with respect to the total weight of solids. The total weight of solids may refer to the total weight of all components other than solvents in the curable composition.

According to embodiments, the ratio of the weight of the base polymer to the weight of the curing agent composition may be about 0.1 to about 10. For example, the ratio of the weight of the base polymer to the weight of the curing agent composition may be about 1 to about 10, about 2 to about 10, about 1 to about 8, about 1 to about 6, about 1 to about 4, or about 1 to about 3.

### [Definition of Terms]

The term "C₁-C₁₅ alkyl group" as used herein refers to a straight or branched aliphatic monovalent hydrocarbon group with 1 to 15 carbon atoms, and may include, as specific examples, a methyl group, an ethyl group, a *n*-propyl group, an isopropyl group, a *n*-butyl group, a *sec*-butyl group, an isobutyl group, a *tert*-butyl group, a *n-*pentyl group, a tert-pentyl group, a neopentyl group, an isopentyl group, a *sec*-pentyl group, a 3-pentyl group, a seo-isopentyl group, a *n*-hexyl group, an isohexyl group, a *sec*-hexyl group, a *tert*-hexyl group, a *n*-heptyl group, an isoheptyl group, a *sec*-heptyl group, a *tert*-heptyl group, a *n*-octyl group, an isooctyl group, a seo-octyl group, a *tert-*octyl group, a *n*-nonyl group, an isononyl group, a seo-nonyl group, a *tert*-nonyl group, a *n*-decyl group, an isodecyl group, a *sec*-decyl group, a *tert-*decyl group, and the like.

The term "C₂-C₁₅ alkenyl group" as used herein refers to a monovalent hydrocarbon group containing one or more C=C double bonds in the middle or at the end of a C₂-C₁₅ alkyl group, and may include as specific examples, an ethenyl group, a propenyl group, a butenyl group, and the like.

The term "C₈-C₂₁ alkenyl phenyl group" as used herein refers to a monovalent benzene group on which one or more C₂-C₁₅ alkenyl groups are substituted, and may include as specific examples, 2-ethenylphenyl group, 3-ethenylphenyl group, 4-ethenylphenyl group, 2-propenylphenyl group, 3-propenylphenyl group, 4-propenylphenyl group, 2-butenylphenyl group, 3-butenylphenyl group, 4-butenylphenyl group, and the like.

The term "C₆-C₆₀ aryl group" as used herein refers to a monovalent group having a carbocyclic aromatic system having 6 to 60 carbon atoms, and for example, may include a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenylenyl group, a pyrenyl group, a chrysenyl group, a perylenyl group, a pentaphenyl group, a heptalenyl group, a naphthacenyl group, a picenyl group, a hexacenyl group, a pentacenyl group, a rubicenyl group, a coronenyl group, an ovalenyl group, and the like. If the C₆-C₆₀ aryl group contains two or more rings, these two or more rings may be connected to each other.

Hereinbelow, the present inventive concept will be described in greater detail through examples. The following examples are provided only to provide a better understanding of the present inventive concept, and it will be apparent to those skilled in the art that the scope of the present inventive concept is not restricted by these examples.

### Preparation Example 1. Preparation of Curing Agent Composition

In a five-neck flask equipped with a thermometer, a condenser, and a stirrer, the following components were added and stirred: 15.0 parts by mass of cyanuric chloride; 105.0 parts by mass of toluene; 2.62 parts by mass of tetrabutylammonium bromide (TBAB); and 11.46 parts by mass of 2-allylphenol.

Then, 6.83 parts by mass of 50% NaOH was added thereto, and while the temperature was raised to 70 °C without controlling the heat, the mixture was allowed to react for 1 hour.

The mixture was then cooled to 25 °C, 9.92 parts by mass of allyl alcohol and 13.68 parts by mass of 50 % NaOH were added thereto, and the mixture was heated to 70 °C and allowed to react for 5 hours.

The mixture was then cooled to 25 °C and washed with water by adding 30 parts by mass of water. The washing was repeated in a total of 5 times, and the toluene layer was removed by diatomaceous earth filtration. Then, the resulting product was concentrated under reduced pressure to produce 24 parts by mass of a curing agent composition (85% yield, pale yellow oil).

The curing agent composition contained 44 wt% of Compound 1, which corresponds to the first compound of Formula 1 wherein n=1, 37 wt% of Compound 2, which corresponds to the second compound of Formula 1 wherein n=2, 12 wt% of Compound 3, which corresponds to the third compound of Formula 1 wherein n=3, and 8 wt% of Compound 4, which corresponds to the fourth compound of Formula 1 wherein n=0.

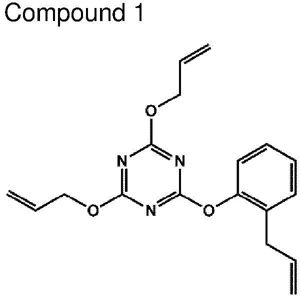

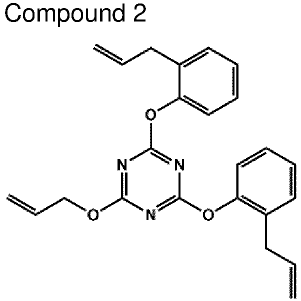

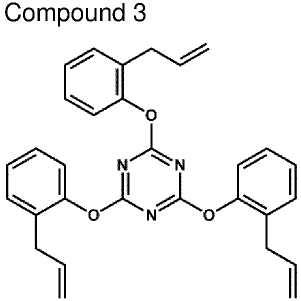

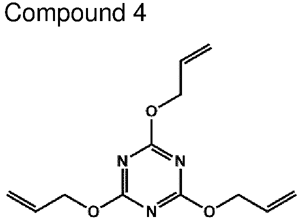

### Preparation Example 2. Preparation of Curing Agent Composition

In a five-neck flask equipped with a thermometer, a condenser, and a stirrer, the following components were added and stirred: 15.0 parts by mass of cyanuric chloride; 105.0 parts by mass of toluene; 2.62 parts by mass of tetrabutylammonium bromide (TBAB); and 16.37 parts by mass of 2-allylphenol.

Then, 9.76 parts by mass of 50% NaOH were added thereto, and while the temperature was raised to 70 °C without controlling the heat, the mixture was allowed to react for 1 hour.

The mixture was then cooled to 25 °C, and after 7.09 parts by mass of allyl alcohol and 9.76 parts by mass of 50 % NaOH were added thereto, the mixture was heated to 70 °C and allowed to react for 5 hours.

The mixture was then cooled to 25 °C and washed with water with addition of 30 parts by mass of water. The washing was repeated in a total of 5 times, and the toluene layer was removed by diatomaceous earth filtration. Then, the resulting product was concentrated under reduced pressure to produce 24 parts by mass of a curing agent composition (81 % yield, pale yellow oil).

The curing agent composition contained 38 wt% of Compound 1, which corresponds to the first compound of Formula 1 wherein n=1, 42 wt% of Compound 2, which corresponds to the second compound of Formula 1 wherein n=2, 15 wt% of Compound 3, which corresponds to the third compound of Formula 1 wherein n=3, and 5 wt% of Compound 4, which corresponds to the fourth compound of Formula 1 wherein n=0.

### Preparation Example 3. Preparation of Curing Agent Composition

In a five-neck flask equipped with a thermometer, a condenser, and a stirrer, the following components were added and stirred: 15.0 parts by mass of cyanuric chloride; 105.0 parts by mass of toluene; 2.62 parts by mass of tetrabutylammonium bromide (TBAB); and 21.83 parts by mass of 2-allylphenol.

Then, 13.01 parts by mass of 50 % NaOH were added thereto, and while the temperature was raised to 70 °C without controlling the heat, the mixture was allowed to react for 1 hour.

The mixture was then cooled to 25 °C, 4.96 parts by mass of allyl alcohol and 6.83 parts by mass of 50 % NaOH were added thereto, and the mixture was heated to 70 °C and allowed to react for 5 hours.

The mixture was then cooled to 25 °C and washed with water with addition of 30 parts by mass of water. The washing was repeated in a total of 5 times, and the toluene layer was removed by diatomaceous earth filtration. Then, the resulting product was concentrated under reduced pressure to produce 24 parts by mass of a curing agent composition (79 % yield, pale yellow oil).

The curing agent composition contained 33 wt% of Compound 1, which corresponds to the first compound of Formula 1 wherein n=1, 46 wt% of Compound 2, which corresponds to the second compound of Formula 1 wherein n=2, 18 wt% of Compound 3, which corresponds to the third compound of Formula 1 wherein n=3, and 3 wt% of Compound 4, which corresponds to the fourth compound of Formula 1 wherein n=0.

### Preparation Example 4. Preparation of Curing Agent Composition

The curing agent composition of Preparation Example 1 was purified on a silica column (Hex:EA = 1:1) by removing Compound 3, which corresponds to the third compound of Formula 1 wherein n=3, and Compound 4, which corresponds to the fourth compound of Formula 1 wherein n=0.

The purified curing agent composition contained 55 wt% of Compound 1, which corresponds to the first compound of Formula 1 wherein n=1, and 45 wt% of Compound 2, which corresponds to the second compound of Formula 1 wherein n=2.

### Preparation Example 5. Preparation of Curing Agent Composition

The curing agent composition of Preparation Example 2 was purified on a silica column (Hex:EA = 1:1) by removing Compound 3, which corresponds to the third compound of Formula 1 wherein n=3, and Compound 4, which corresponds to the fourth compound of Formula 1 wherein n=0.

The purified curing agent composition contained 45 wt% of Compound 1, which corresponds to the first compound of Formula 1 wherein n=1, and 55 wt% of Compound 2, which corresponds to the second compound of Formula 1 wherein n=2.

### Preparation Example 6. Preparation of Curing Agent Composition

The curing agent composition of Preparation Example 2 was purified on a silica column (Hex:EA=1:1) by removing Compound 1, which corresponds to the first compound of Formula 1 wherein n=1, and Compound 2, which corresponds to the second compound of Formula 1 wherein n=2.

Thereafter, a curing agent composition was prepared by mixing 80 wt% of Compound 1, which corresponds to the first compound of Formula 1 wherein n=1, and 20 wt% of Compound 2, which corresponds to the second compound of Formula 1 wherein n=2.

### Preparation Example 7. Preparation of Curing Agent Composition

The curing agent composition of Preparation Example 2 was purified on a silica column (Hex:EA=1:1) by removing Compound 1, which corresponds to the first compound of Formula 1 wherein n=1, and Compound 2, which corresponds to the second compound of Formula 1 wherein n=2.

Thereafter, a curing agent composition was prepared by mixing 20 wt% of Compound 1, which corresponds to the first compound of Formula 1 wherein n=1, and 80 wt% of Compound 2, which corresponds to the second compound of Formula 1 wherein n=2.

### Comparative Preparation Example 1. Preparation of 2,4,6-tris(2-allylphenoxy)-1,3,5-triazine (TAPT)

In a flask equipped with a thermometer, a condenser, and a stirrer, 15.0 parts by mass of cyanuric chloride, 40.8 parts by mass of toluene, 4.1 parts by mass of dimethylformamide, 32.9 parts by mass of 2-allylphenol, and 67.6 parts by mass of potassium carbonate were added, and the temperature was raised to 100 °C.

The resulting mixture was allowed to react at 100 °C for 6 hours and then cooled, and after adding 200 parts by mass of toluene thereto, the resulting mixture was washed with water and concentrated under reduced pressure to obtain 37.9 parts by mass of an esterification reaction product (AP-CC) of cyanuric chloride and 2-allylphenol, which is represented as Compound 3 (TAPT (2,4,6-tris(2-allylphenoxy)-1,3,5-triazine)) below. The melting point of the obtained reaction product was 110 °C.

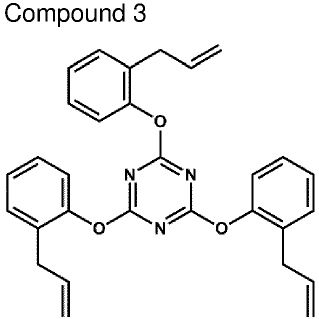

### Evaluation Example 1: Solubility Evaluation

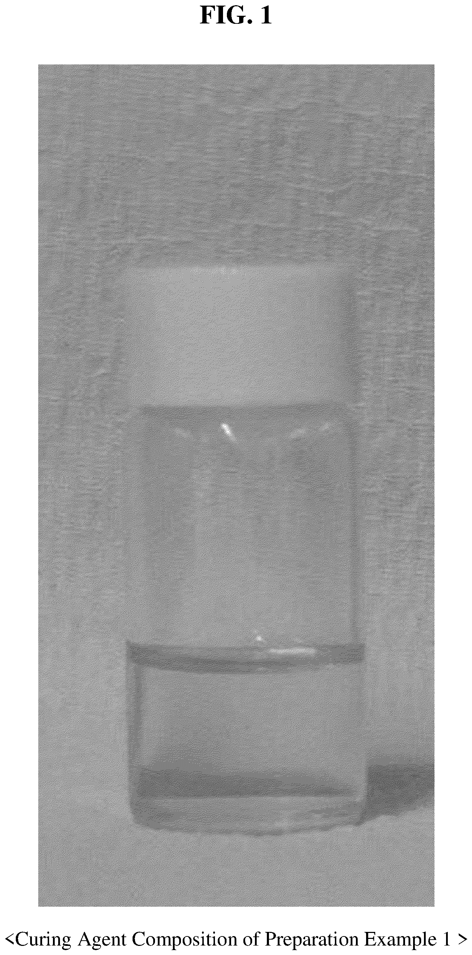

The curing agent composition of Preparation Example 1 was prepared. FIG. 1 shows a photograph of the curing agent composition of Preparation Example 1.

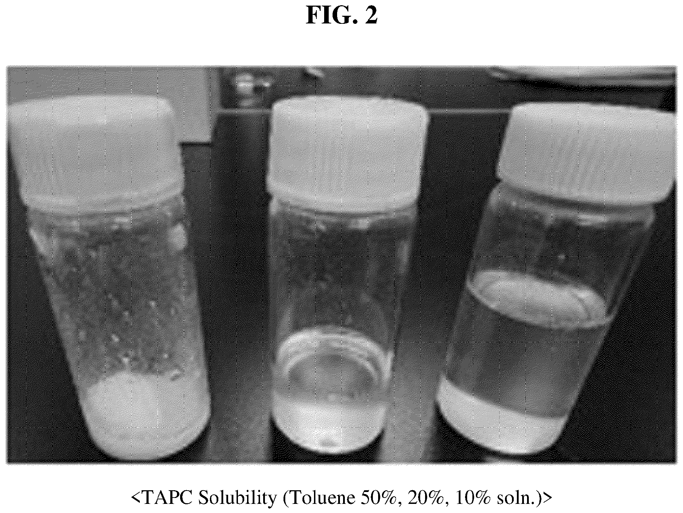

The TAPT prepared in Comparative Preparation Example 1 was dissolved in toluene to prepare solutions at concentrations of 10 %, 20 %, and 50 %, respectively. The solubility in toluene was evaluated by visual assessment on whether or not the curing agent composition or TAPT is completely dissolved in the prepared solutions. The evaluation results are shown in FIG. 2 and Table 1.

Referring to FIG. 1, FIG. 2, and Table 1, the curing agent composition prepared in Preparation Example 1 remained in a liquid state at room temperature and thus required no further dissolution, whereas the TAPT prepared in Comparative Preparation Example 1 remained in a solid state and thus required further dissolution.

In addition, as the TAPT prepared in Comparative Preparation Example 1 showed no solubility in the 50% conc. solution, and was partially precipitated in the 20% conc. solution, high-concentration solutions in toluene could not be prepared. Thus, the TAPT solutions had the issue of TAPT being precipitated as toluene evaporates, when cured at a high temperature under vacuum.

### Evaluation Example 2: Measurement of Decomposition Temperature (Td)

Using a thermogravimetric analyzer (TGA), while the temperature was raised up to 900 °C at a rate of 20 °C per minute with N₂ gas purge, the decomposition temperature of each of the curing agent compositions prepared in Preparation Examples 1 to 7 and Comparative Preparation Example 1, triallyl isocyanurate (TAIC, CAS 1025-15-6, Product NO. 114235) and triallyl cyanurate (TAC, CAS 101-37-1, Product NO. 291609) purchased from Sigma-Aldrich was measured. The temperature at which the weight of a sample is decreased by 5 % as measured by a thermogravimetric analyzer was taken as decomposition temperature. The measurement results are shown in Table 1.

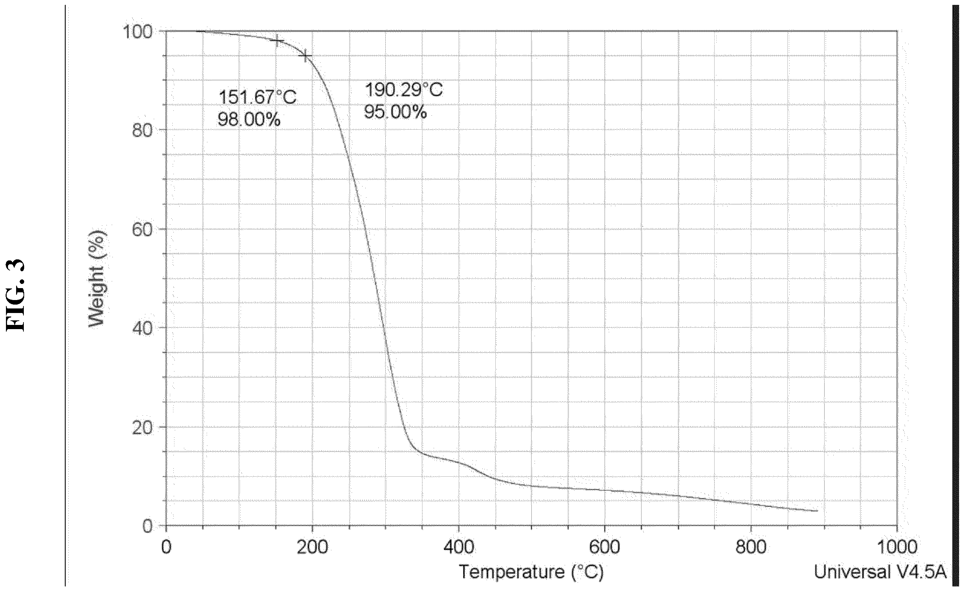

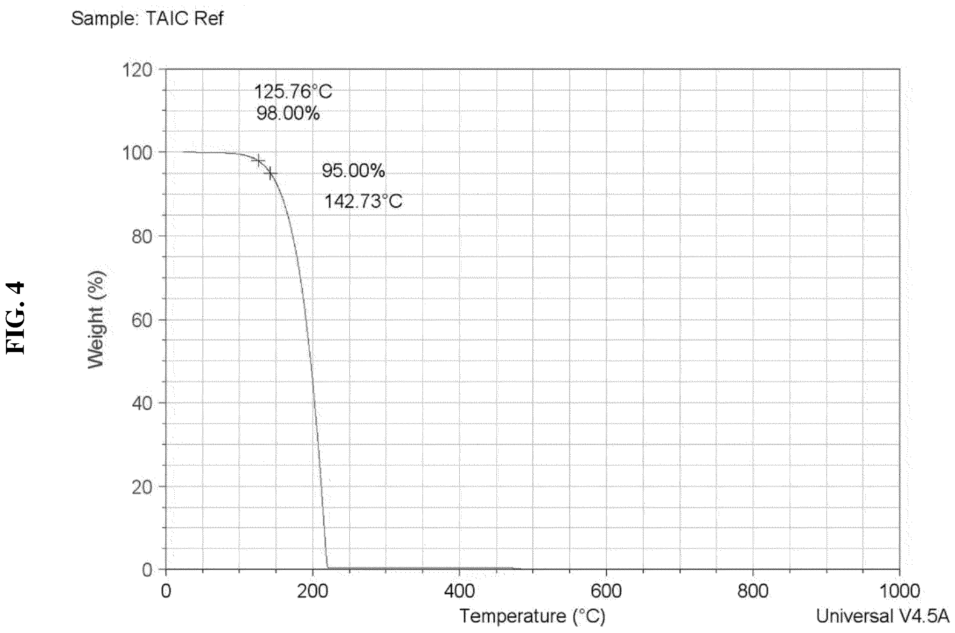

In addition, the measurement results of the decomposition temperature of the curing agent composition prepared in Preparation Example 1 are shown in FIG. 3, and the measurement results of the decomposition temperature of TAIC are shown in FIG. 4.

Referring to FIG. 3, FIG. 4, and Table 1, within the 5 % loss section, the decomposition temperature of TAIC corresponding to Compound 4 is 142.73 °C, whereas the curing agent composition of Preparation Example 1 shows a decomposition temperature of 190.29 °C, which is increased by 50 °C therefrom.

This indicates that the curing agent composition was able to effectively prevent uneven curing due to decomposition of the curing agent composition even if a crosslinking reaction was carried out in vacuum and high-temperature conditions.

**Table 1**

| | Curing agent composition | | | | Solubili ty | Decompositi on temperature |
|---|---|---|---|---|---|---|
| | Compou nd 1 | Compou nd 2 | Compou nd 3 | Compou nd 4 | | |
| Preparatio n Example 1 | 44 | 37 | 12 | 8 | Liquid | 190.29 |
| Preparatio n Example 2 | 38 | 42 | 15 | 5 | Liquid | 192.41 |
| Preparatio n Example 3 | 33 | 46 | 18 | 3 | Liquid | 195.18 |
| Preparatio n Example 4 | 55 | 45 | - | - | Liquid | 180.09 |
| Preparatio n Example 5 | 45 | 55 | - | - | Liquid | 183.33 |
| Preparatio n Example 6 | 20 | 80 | - | - | Liquid | 188.27 |
| Preparatio n Example 7 | 80 | 20 | - | - | Liquid | 176.80 |
| Comparative Preparatio n Example 1 | - | - | 100 | - | X | Unavailable for measureme nt |
| TAC | - | - | - | 100 | Liquid | 162.00 |
| TAIC | - | - | - | - | Liquid | 142.73 |

### Example 1

5.0 parts by mass of a curing agent (the curing agent composition of Preparation Example 1) and 20.93 parts by mass of toluene as a solvent were added to 20.0 parts by mass of methacrylate-modified polyphenylene oxide (mPPO, Sabic, SA-9000), and the resulting mixture was subjected to dissolution for 2 hours in a sonicator (temperature up to 40 °C). Then, 0.582 parts by mass of dicumyl peroxide (DCP) as an initiator was added thereto to prepare a varnish.

After impregnating the varnish with glass fibers, the resulting product was dried in an oven at 130 °C for 3 minutes. Then, the resulting product was pressed at 180 °C for 2 hours to produce a copper-clad laminate (CCL).

### Examples 2 to 7 and Comparative Examples 1 to 3

Copper-clad laminates (CCLs) were prepared following the same process as in Example 1, except that the amount of the solvent, the type and amount of the curing agent, and the amount of the initiator were changed as shown in Table 2.

### Evaluation Example 3: Measurement of Glass-Transition Temperature (Tg)

By using DSC (Q20) (TA Instrument) as a differential scanning calorimeter, 10 mg of each of the copper-clad laminates (CCLs) of Examples 1 to 7 and Comparative Examples 1 and 2 was set on an aluminum-based support, and while flowing nitrogen gas at a flow rate of 50 mL/min., the temperature was raised from 30 °C to 300 °C at a rate of 20 °C/min., and glass-transition temperature measurements were taken according to JIS K 7121-1987. In addition, the glass-transition temperature of each CCL was measured repeatedly four times under the same conditions, and the measurement results are shown in Table 2.

**Table 2**

| | mPP O | Toluen e | DCP | Curing agent | | Molar ratio of DCP/Curi ng agent | Tg |
|---|---|---|---|---|---|---|---|
| | | | | Type | Amou nt | | |
| Example 1 | 20 | 21.88 | 1.74 7 | Preparatio n Example 1 | 5 | 0.3 | 257.75 |
| | | | | | | | 258.47 |
| | | | | | | | 258.32 |
| | | | | | | | 258.18 |
| Example 2 | 20 | 21.88 | 1.74 7 | Preparatio n Example 2 | 5 | 0.3 | 254.17 |
| | | | | | | | 254.66 |
| | | | | | | | 255.08 |
| | | | | | | | 255.47 |
| Example 3 | 20 | 21.88 | 1.74 7 | Preparatio n Example 3 | 5 | 0.3 | 251.09 |
| | | | | | | | 251.43 |
| | | | | | | | 252.05 |
| | | | | | | | 252.11 |
| Example 4 | 20 | 21.88 | 1.74 7 | Preparatio n Example 4 | 5 | 0.3 | 255.16 |
| | | | | | | | 256.15 |
| | | | | | | | 257.44 |
| | | | | | | | 258.30 |
| Example 5 | 20 | 21.88 | 1.74 7 | Preparatio n Example 5 | 5 | 0.3 | 252.12 |
| | | | | | | | 253.49 |
| | | | | | | | 254.90 |
| | | | | | | | 255.29 |
| Example 6 | 20 | 21.88 | 1.74 7 | Preparatio n Example 6 | 5 | 0.3 | 247.78 |
| | | | | | | | 250.88 |
| | | | | | | | 253.02 |
| | | | | | | | 255.63 |
| Example 7 | 20 | 21.88 | 1.74 7 | Preparatio n Example 7 | 5 | 0.3 | 249.69 |
| | | | | | | | 251.50 |
| | | | | | | | 255.99 |
| | | | | | | | 257.31 |
| Comparati ve Example 1 | 20 | 20.79 | 0.40 7 | Comparati ve Preparatio n Example 1 | 5 | 0.1 | Unavailable for measureme nt |
| | | | | | | | Unavailable for measureme nt |
| | | | | | | | Unavailable for measureme nt |
| | | | | | | | Unavailable for measureme nt |
| Comparati ve Example 2 | 20 | 20.79 | 0.40 7 | TAC | 5 | 0.1 | 167.78 |
| | | | | | | | 173.05 |
| | | | | | | | 175.11 |
| | | | | | | | 178.39 |
| Comparati ve Example 3 | 20 | 20.79 | 0.40 7 | TAIC | 5 | 0.1 | 257.23 |
| | | | | | | | 242.94 |
| | | | | | | | 259.62 |
| | | | | | | | 259.62 |

Referring to Table 2, it was found that the CCLs including the curing agent compositions according to Examples of the present disclosure have a comparable decomposition temperature (Tg) compared to the CCLs that include the curing agent compositions according to Comparative Examples. In particular, it was found that in the cases including the curing agent compositions according to Examples, even when repeated measurements of Tg were taken, deviations in the repeated measurements of Tg values were smaller compared to the cases including the curing agent compositions according to Comparative Examples.

In other words, the curing agent compositions according to Examples showed a smaller variance for Tg compared to the curing agent compositions according to Comparative Examples. Accordingly, the uneven curing due to partial evaporation of the curing agent composition during curing under vacuum at a high-temperature may be effectively prevented.

Further, in case of Comparative Example 1, which contained the TAPT according to Comparative Preparation Example 1, the measurement of Tg of the CCL was unavailable because most of the TAPT were precipitated instead of dissolved, unlike the curing agent compositions according to Examples.

The above examples and comparative examples are only for illustrating the present disclosure, and are not intended to limit the present disclosure. It will be apparent to those of ordinary skill in the art that many changes and modifications may be made without departing from the scope and spirit of the present disclosure. The appended claims, therefore, are intended to cover all such changes and modifications as they fall within the scope of the present disclosure.

## Claims

1. A curing agent composition comprising:
a first compound represented by Formula 1 wherein n is 1; and
a second compound represented by Formula 1 wherein n is 2, 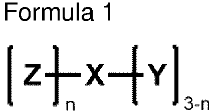 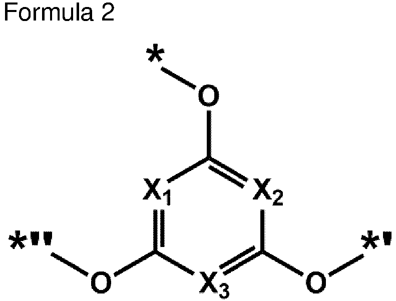 wherein, in Formulas 1 and 2,
X is represented by Formula 2,
X₁ is N or CR₁,
X₂ is N or CR₂,
X₃ is N or CR₃,
*, *', and *" are each independently a binding site with Y or Z in Formula 1,
Y is a C₂-C₁₅ alkenyl group,
Z is a C₈-C₂₁ alkenyl phenyl group,
R₁ to R₃ are each independently hydrogen, a C₁-C₁₅ alkyl group, a C₂-C₁₅ alkenyl group, or a C₈-C₂₁ alkenyl phenyl group, and
n is an integer of 0 to 3.

2. The curing agent composition of claim 1, wherein a ratio of a content of the first compound to a content of the second compound is 10:90 to 90:10.

3. The curing agent composition of claim 1, wherein a content of the first compound is greater than or equal to a content of the second compound.

4. The curing agent composition of claim 1, further comprising:
a third compound represented by Formula 1 wherein n is 3; or
a fourth compound represented by Formula 1 wherein n is 0.

5. The curing agent composition of claim 4, wherein a sum of a weight of the third compound and a weight of the fourth compound is 25 wt% or less with respect to a total weight of the curing agent composition.

6. The curing agent composition of claim 1, wherein X₁ to X₃ in Formula 2 are each N.

7. The curing agent composition of claim 1, wherein, in Formula 1, Y is represented by Formula 3: 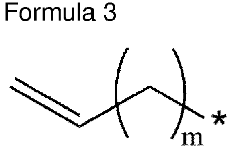 wherein, in Formula 3,
m is an integer of 0 to 5, and
* is a binding site with Formula 2.

8. The curing agent composition of claim 1, wherein Z is represented by any one of Formulas 4-1 to 4-3: 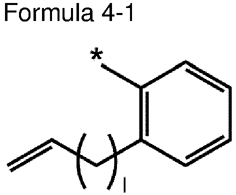 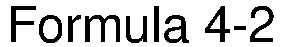 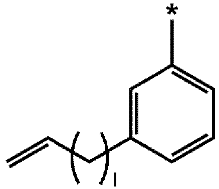 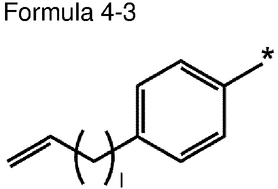 wherein, in Formulas 4-1 to 4-3,
I is an integer of 0 to 5, and
* is a binding site with Formula 2.

9. The curing agent composition of claim 1, wherein a decomposition temperature (Td) of the curing agent composition is 150 °C or more.

10. A curable composition comprising:
the curing agent composition according to claim 1;
a base polymer; and
an initiator.

11. The curable composition of claim 10, wherein the base polymer comprises an acrylate-modified polyphenylene oxide or a methacrylate-modified polyphenylene oxide.

12. The curable composition of claim 10, wherein the initiator comprises a peroxide-based initiator.

13. The curable composition of claim 10, wherein a ratio of the number of moles of the initiator to the number of moles of the curing agent composition is 0.01 to 0.5.

14. The curable composition of claim 10, wherein a ratio of a weight of the base polymer to a weight of the curing agent composition is 0.1 to 10.
